# EUROPEAN PATENT APPLICATION

(11) **EP 3 632 367 A1**
(43) Date of publication of application: **08.04.2020**
(21) Application number: 18198434.5
(22) Date of filing: 03.10.2018
(51) Int. Cl.: A61C 8/00

(54) **DENTAL COMPONENT WITH A RETENTION INTERFACE**

(71) Applicant: Nobel Biocare Services AG, 8302 Kloten (CH)
(72) Inventor: Weitzel, Jörg, (D) 78239 Rielasingen-Worblingen (DE); Bill, Oliver, 4566 Kriegstetten (CH); Abazi, Ramadan, 8004 Zurich (CH)
(74) Representative: Capré, Didier

(57) **Abstract**

A dental component (110) is provided that comprises a body with an apical end, a coronal end, and a longitudinal axis (L) extending between the coronal end and the apical end. The dental component (110) further comprises an interface (120) for retaining another dental component (160; 860) in the direction of the longitudinal axis, wherein at least a portion of the interface is formed as a continuous circumferential wall (143) about the longitudinal axis (L). The circumferential wall (143) includes at least one retention section (141) and at least one weakened section (145) , the weakened section (145) having a lower wall thickness than the retention section (141) . Further, the weakened section (145) is configured to increase the flexibility of the interface (120) in a radial direction, the at least one retention section alternates with the at least one weakened section (145) along the circumference of the circumferential wall and the at least one weakened section (145) has a reduced radial thickness relative to the radial thickness of the at least one retention section (141).

## Description

### TECHNICAL FIELD

The present invention relates to a dental component with an interface for retaining another dental component. The present invention also relates to a dental assembly including a dental component with such an interface and another dental component with a corresponding interface.

### BACKGROUND OF THE INVENTION

Dental restorations, in particular dental restorations that are mounted on a dental implant, are commonly comprising multiple parts. In other words, in order to place a dental restoration in the mouth of a patient, several dental components are mounted to each other. In general, these components are designed in a modular way to provide adapted solutions to different patients.

During assembly, mounting the dental components to each other often turns out to be rather difficult due to their size and the limited space in the mouth of a patient. This challenge increases if more than two dental components are necessary to achieve the desired support for an artificial tooth or a bridge or any other dental component.

Further, these dental components are commonly fixed to each other using dental screws. More specifically, a dental professional maneuvers the dental components into the mouth of a patient and tries to correctly place these components in relation to each other. Afterwards, these dental components have to be held in position while a dental screw is guided into engagement with these components and a dental fastening tool is brought into engagement with the dental screw. This handling of dental components and tools is particularly challenging if the dental restoration is to be installed on the side of the maxilla of a patient, i. e. the procedure has to be performed upside down.

### SUMMARY OF THE INVENTION

In view of this situation, it was an objective to facilitate the assembly of dental components in the mouth of a patient.

In order to address this objective, a dental component is provided that comprises a body with an apical end, a coronal end, and a longitudinal axis extending between the apical end and the coronal end. The dental component further comprises an interface extending along the longitudinal axis for retaining another dental component, wherein at least a portion of the interface is formed as a continuous circumferential wall about the longitudinal axis. The circumferential wall includes at least one retention section and at least one weakened section. The weakened section is configured to increase the flexibility of the interface in a radial direction in relation to the longitudinal axis. The at least one retention section alternates with the at least one weakened section along the circumference of the circumferential wall. In a radial cross section containing the retention section and weakened section, the thickness of the circumferential wall increases from the weakened section to the retention section, and in a longitudinal cross section containing the weakened section, the thickness of the circumferential wall increases.

In other words, in a cross-section perpendicular to the longitudinal axis, the weakened section of the circumferential wall of this embodiment has a lower wall thickness than an adjacent retention section along the wall in a circumferential direction. Further, the at least one retention section is defined as the portion of the circumferential wall having a at least the general thickness of the circumferential wall and preferably the general thickness as will be described in more detail below. In a cross section perpendicular to the longitudinal axis, the retention section may be a point on the circumferentially wall. Alternatively, it may be a circumferential section along the circumferential wall, i. e. along an angular range in relation to the longitudinal axis. In other words, the retention section may be a vertex or have an extension in the circumferential direction of the wall. The at least one weakened section is located in the remaining part of the circumferential wall having a reduced thickness in relation to the retention section.

Along the circumferential wall in a circumferential direction, the wall thickness of the retention section is preferably the general wall thickness, wherein the weakened section has a reduced thickness in relation to the general wall thickness.

Preferably, the general geometry of the circumferential wall is substantially rotationally symmetric about the longitudinal axis. Alternatively or additionally it may be substantially cylindrical. It may also be conical in a range of 1 to 10 degrees and preferably in a range of 1 to 4 degrees. The general wall thickness is at least in a circumferential direction constant. Preferably, the thickness of the circumferential wall is substantially constant . The weakened section forms a recess in relation to the general wall thickness.

The terms "general" and "substantially" in relation to the shape and thickness of the circumferential wall are used since the weakened section has a thickness that is lower than the general thickness of the circumferential wall. In other words, the weakened section is generated by removing material from the general geometry of the circumferential wall. Further, the thickness of the retention section is higher than the thickness of the weakened section but may differ from the general thickness. Preferably, the retention section has the general thickness of the circumferential wall.

In other words, the general thickness of the circumferential wall is its thickness except for the location of the weakened section and, if it differs, the retention section.

Further, the embodiment including indexing means described further down below, if integrally formed on the circumferential wall, also does not correspond to the general thickness. In this case, the indexing means is created by material protruding from the wall.

Since the at least retention section alternates with the at least one weakened section, the number of retention sections and weakened sections is equal. Preferably, there are one to five sections of each of the retention section and weakened section. Most preferably, there are three sections since they provide a statically defined assembly.

Upon application of a force to the circumferential wall, the interface deforms more readily in the weakened section compared to deformation of the interface in the retention section. This results in the retention section being moved in a radial direction. The flexibility of the retention section allows the circumferential wall to retain another dental component by a friction and/or positive engagement fit so that a relative movement of the dental component in the direction of the longitudinal axis can be prevented. The flexibility of the interface is generally determined in view of the type of retaining connection used between the dental component and the other dental component. This is particularly advantageous for an assembly on the side of the maxilla, where the installation of dental components takes place upside down.

During assembly and retainment, the circumferential wall provides stable support and an increased integrity compared to retaining elements that gain flexibility by being individual tabs placed circumferentially at a distance from each other. The circumferential wall particularly provides lateral stability, which is advantageous when a dental professional assembles the dental component to another dental component while being tilted in relation to each other. In case of individual retaining elements, such an assembly may well result in damage and instability of these elements.

Further, an increased durability of the interface is achieved by rendering the weakened section more flexible than the retaining section so that a deformation takes place in a portion surrounding the retaining section. More specifically, if a retention section is located at the outer end of the circumferential wall, the area of deformation on the circumferential wall is substantially u-shaped. If a retention section is located along the wall, deformation is substantially defined by an O-shape. The deformation is preferably an elastic deformation.

In contrast, in the case of individual retaining elements, there is no material on either circumferential side of such an element so that it is only rendered flexible by deformation taking place at the at least one longitudinal end of the element where it is connected to the remaining dental component. As a result, such an element is more likely to be damaged during installation of the dental component by plastic deformation or may even fail.

The circumferential wall may have any general shape in a cross-section perpendicular to the longitudinal axis such as circular, oval, rectangular, polygonal, etc. as long as it is formed as continuous circumferential wall.

In one preferred embodiment, the at least one retention section has an angular extension along the circumference of the circumferential wall that is smaller than the angular extension of the at least one weakened section along the circumferential wall.

This configuration has the effect of an increased flexibility of the interface. Further, the larger the extension of the weakened section in relation to the retention section, the higher the flexibility of the interface, i. e. the elasticity of the retention section in the radial direction. Preferably, the retention section has an extension about the circumferential wall that is at maximum one third of the extension of the weakened section.

In another embodiment, a first circumferential recess is defined in the circumferential wall on the side of the retention section, preferably along the circumferential extension of the weakened section and/or retention section, the circumferential recess being located apically and/or coronally of the weakened and retention sections.

Providing a first circumferential recess on the side of the wall where the retention section is located is a means to add to the flexibility of the interface since the circumferential recess locally decreases the thickness of the circumferential wall so that the at least one retention section adjacent to this recess is rendered more elastic in the radial direction relative to the longitudinal axis.

The circumferential recess is preferably defined as a continuous circumferential recess extending along the circumference of the circumferential wall..

In yet another embodiment, the thickness of the circumferential wall of the weakened section is reduced on the outer surface and/or inner surface of the circumferential wall.

Consequently, the interface can be configured as a male or female interface. This adaptability allows the interface to be used for a wide variety of dental components. More specifically, the weakened section and other features that increase the flexibility of the interface at the retention section may be placed on a dental component so that the integrity of the component is optimally maintained.

At the location along the interface where the weakened section and retention section are provided, a variation of the width of the interface in the cross-section perpendicular to the longitudinal axis is present. For example, the cross-section of the interface may generally have a circular geometry. Nonetheless, the weakened section and, if present, the circumferential recess result in a cross-section that deviates from the circular geometry but only to a degree that the skilled person will still recognize the basic shape of the circumferential wall's cross-section. The same applies to any of the other general shapes listed above that the interface's cross-section may have.

In one embodiment, the reduction of the wall thickness at the at least one weakened section is a continuous reduction from both sides of the retention section in the circumferential direction, the reduction of the wall thickness preferably being provided along the entire circumferential length of the at least one weakened section.

Although a discontinuous reduction in thickness at the weakened section may be incorporated, a continuous reduction in thickness of the circumferential wall from both sides of the weakened section is preferred due to its better performance in terms of strength of the interface. The strength of the interface can be further increased by providing the continuous reduction of the wall thickness along at least a portion of entire circumferential length of the at least one weakened section. In other words, the at least one weakened section does not comprise a portion along the circumferential direction of the continuous wall that has a constant thickness.

As a modification and provided that there is more than one weakened section at the interface of the dental component, one or more of the weakened sections may have such a continuous reduction in wall thickness on both sides in a circumferential direction of the wall.

In yet another embodiment, the reduction in wall thickness of the weakened section is formed as a curve in a cross-section perpendicular to the longitudinal axis. The reduction of the wall thickness being designed as a curve avoids the occurrence of stress concentrations during deformation of the interface when or while the component and the other component are assembled.

In another embodiment, the interface further comprises a second circumferential recess in the circumferential direction on the opposite side of the circumferential wall where the retention section is provided, in particular a continuous second circumferential recess, the second circumferential recess preferably being located partly on the level of the first circumferential recess.

In other words, there may also be a recess on the side of the wall opposite to the side of the wall where the retention section is provided for engaging another dental component. Such a second circumferential recess provides several advantageous design options to the dental component in view of adapting the flexibility of the interface to a desired way of coupling between the two dental components. For example, one option is to design the second circumferential recess as a continuous second circumferential recess. As a modification, the second circumferential recess may be designed as an intermittent circumferential recess. There might also be a plurality of second circumferential recesses. The second circumferential recess is preferably located opposite to the first circumferential recess and at least partly on the level of the first circumferential recess. Being on the same level provides for an even more reduced wall thickness that results in a corresponding increase in flexibility of the interface. Further, the circumferential recess may also be used as a snap-fit recess for retaining the other dental component.

In yet another embodiment, the interface is provided at an end of the dental component. Preferably, a chamfer is defined at the end of the interface and more preferably on the side of the circumferential wall opposite to the retention section. The chamfer even more preferably extends beyond the retention and weakened sections in the longitudinal direction of the dental component.

Such a chamfer is yet another advantageous design option for optimally adjusting the flexibility of the interface. Further, the chamfer may assist in mounting the dental component to another dental component since it directs the dental components towards the predetermined relative position for proper installation.

In another embodiment, the chamfer and the second circumferential recess are spaced apart from each other in the longitudinal direction of the dental component. This embodiment results in less flexibility compared to a configuration, in which the chamfer extends beyond the weakened section. Further, it is easier to handle manufacturing tolerances.

In one embodiment, the interface further comprises on the side of the circumferential wall opposite to the retention section at least two elongated notches defined in the longitudinal direction of the dental component, the notches preferably being formed adjacent to either side of each retention section.

Elongated notches as defined above particularly enhance deformation of the sides of the U-shaped or O-shaped deformation of the at least one retention section. These notches have a function that is similar to the one of the at least one weakened section. However, the elongated notches have a smaller extension in the circumferential direction of the circumferential wall and preferably a greater extension in the longitudinal direction than the at least one weakened section.

In a preferred embodiment, each of the notches intersects the second circumferential recess on the inner surface of the circumferential wall and preferably extends at least along the entire width of the second circumferential recess.

The intersection between the at least two elongated notches and the second circumferential recess fully support the U-shaped or O-shaped deformation of the at least one **retention section.** This way, the elongated notches are able to provide a particular predefined deformation pattern at the retention section of the interface.

In one embodiment, the interface further comprises a first elongated cutout extending throughout the circumferential wall in a direction substantially perpendicular to the longitudinal axis, the first elongated cutout being located adjacent to the retention section in the longitudinal direction and preferably in an overlapping relationship with the first circumferential recess on the side of the circumferential wall, where the retention section is located.

In other words, the first elongated cutout preferably extends in a plane perpendicular to the longitudinal axis. Further, the cutout is preferably oriented along a secant in relation to the profile of the circumferential wall in this plane. Consequently, the cutout is preferably defined along a straight line into the circumferential wall so that a longitudinal hole is formed within this wall.

The first elongated cutout increases the flexibility of the interface at the retention section, in particular if the first elongated cutout is in an overlapping relationship with a first circumferential recess as defined in one of the previous embodiments. Further, the location of the first elongated cutout adjacent to the retention section but preferably at a distance results in the retention section being formed as a beam with fixed ends that has an increased rotational degree of freedom about an axis parallel to its longitudinal axis in comparison to an interface without a cutout. This is particularly advantageous if the coupling between the dental component and the other dental component is configured as a snap fit (positive engagement fit). The amount of flexibility about the axis parallel to the longitudinal axis of the cutout may be adjusted by the distance between the retention section and the cutout that defines the size of the cross section of this beam-like feature.

It should be noted that the term cutout is not to be understood as limiting in terms of the way the cutout is manufactured. In other words, the cutout does not have to be generated by cutting into the circumferential wall, i. e. any manufacturing method able to result in the geometry of the cutout may be used.

In one embodiment, the interface further comprises a second elongated cutout extending throughout the circumferential wall, the second elongated cutout being arranged parallel to and spaced apart from the first elongated cutout. This forms a bending section between the first elongated cutout and the second elongated cutout. The bending section comprises at least a portion of the retention section.

As a result of this embodiment, the retention section is at least located along an intermediate section of the circumferential wall in the longitudinal direction. In other words, it may not be located at an end of the dental component's interface.

The bending section also forms a beam fixed at its two ends. As in the previous embodiment, this beam-like feature has an increased flexibility in the radial direction and about an axis parallel to the elongated cutouts. The latter depends on the distance between the first and second elongated cutouts, i.e. the larger the distance the bigger the cross-sectional area of the bending section and the less flexibility it has about the longitudinal axis.

In one embodiment, the interface further comprises an indexing means for locking the dental component to the other dental component in a rotational direction about the longitudinal axis, wherein the indexing means comprises at least one indexing finger, the indexing finger preferably defining an indexing surface that at least partly faces in the direction of the longitudinal axis.

The at least one indexing finger in combination with the retention section has the advantage to provide the retention section with a predetermined rotational position in relation to the other dental component at which the other dental component is to be retained.

If the at least one indexing finger further defines an indexing surface that at least partly faces in the direction of the longitudinal axis, i. e. towards the other dental component upon assembly, this indexing surface provides guidance to the retention section towards the predetermined rotational position.

In a further embodiment, the retention section is located adjacent to a circumferential position of an indexing finger in the longitudinal direction or is located equidistantly to both sides in the circumferential direction from the next indexing finger or indexing fingers.

The placement of the at least one indexing finger in relation to the retention section provides another design option to adjust the flexibility of the interface. More specifically, if the indexing finger is located at the same circumferential position of the circumferential wall as the retention section, the flexibility of the retention section may be lower than in a case, in which the indexing finger is located at a different circumferential position than the retention section.

It is further provided a dental assembly comprising a dental component with an interface according to any one of the embodiments from above and another dental component with a corresponding interface for assembly to the interface of the dental component.

In such a dental assembly the interface of the dental component and the corresponding interface of the other dental component may be designed to provide retention between these dental components in an assembled state by a press fit (friction fit) or a positive engagement fit (snap fit). In case of the former, the retention section of the dental component radially protrudes outwards or inwards relative to the longitudinal axis and in relation to the weakened section. This protrusion is used to press against a corresponding retention portion of the other dental component in order to retain the two dental components by a friction fit.

The embodiment is able to reliably keep the two dental components assembled and at the same time to offer the option of an easy disengagement of these components such as for an adjustment or for adapting the assembly to the individual situation of a patient. In case of the latter, the retention section of the dental component snaps into a corresponding feature of the other dental component so that a positive engagement fit is created. This configuration has the advantage of being able to tightly retain the two dental components even without the need for a dental screw. Nonetheless, a dental screw may still be used to further ensure the integrity of the assembly.

Further, a dental component is provided that comprises a body with an apical end, a coronal end, and a longitudinal axis extending between the apical end and the coronal end. The dental component further comprises an interface for retaining another dental component in the direction of the longitudinal axis, wherein a portion of the interface is formed as a continuous circumferential wall about the longitudinal axis. The circumferential wall includes at least one retention section and at least one weakened section. The at least one retention section alternates with the at least one weakened section along the circumference of the circumferential wall. Each retention section is limited (defined) on either of its two sides in the circumferential direction by at least one weakened section formed as a concave recess at the end of the wall so that the end of the circumferential wall has an undulating shape.

In other words, the at least one retention section forms a peak protruding at the end of the interface in the direction of the longitudinal axis and the at least one weakened section due to the concave recess forms a valley. Thus, the retention section and the weakened section provide a peak and valley profile at the end of the interface extending about the circumferential wall. The alternating configuration of weakened and retention sections increase the flexibility of the retention section in a radial direction. As described above, this flexibility provides the retention section with the ability to retain the other dental component by exerting a force in a radial direction that may be used for a friction fit or a positive engagement fit.

The dental component may be provided with any of the additional features of the embodiments previously described that allow for an increase in flexibility of the interface such as the first circumferential recess, the second circumferential recess, the at least two elongated notches, the chamfer and/or the first longitudinal cut.

Further, a dental component is provided that comprises a body with an apical end, a coronal end, and a longitudinal axis extending between the apical end and the coronal end. The dental component further comprises an interface for retaining another dental component in the direction of the longitudinal axis, wherein a portion of the interface is formed as a continuous circumferential wall about the longitudinal axis. The dental component also comprises an indexing means for locking the dental component to the other dental component in a rotational direction about the longitudinal axis. The indexing means comprises at least one indexing finger being adjacent to one side of and preferably integral with the circumferential wall. As a result, the indexing finger forms a protrusion from the circumferential wall. The at least one indexing finger defines an indexing surface that preferably at least partly faces in the direction of the longitudinal axis. At least a portion of an edge of the indexing surface extending in the direction of the longitudinal axis forms a retention means for retaining the dental component to the other dental component along the longitudinal axis by a friction fit (interference fit).

### SHORT DESCRIPTION OF THE DRAWINGS

The following figures illustrate preferred embodiments of the present invention. These embodiments are not to be construed as limiting but merely for enhancing the understanding of the invention in context with the following description. In these figures, same reference signs refer to features throughout the drawings that have the same or an equivalent function and/or structure. This particularly applies to reference signs that are identical in the last two digits, wherein the preceding digits denote the embodiment. It is to be noted that a repetitive description of these components is generally omitted for reasons of conciseness of the description.
Figure 1 is a perspective view of an interface of a dental component according to a first embodiment;
Figure 2 is a cross-section along the longitudinal axis of the dental component illustrated in figure 1 assembled to another dental component and tightened using a dental screw;
Figure 3 is a perspective view of an interface of a dental component according to a second embodiment;
Figure 4 is a cross-sectional view perpendicular to the longitudinal axis of the dental component illustrated in figure 3 at the retaining section and weakened section;
Figure 5 is a perspective cross-sectional view of an interface along the longitudinal axis of a dental component according to a third embodiment;
Figure 6 is a cross-sectional view perpendicular to the longitudinal axis of the dental component illustrated in figure 5;
Figure 7 is a perspective cross-sectional view of an interface of a dental component according to a fourth embodiment;
Figure 8 is a perspective view of an interface of a dental component according to a fifth embodiment;
Figure 9 is a perspective view of an interface of a dental component according to a sixth embodiment;
Figure 10 is a perspective cross-sectional view in the longitudinal direction of the dental component illustrated in figure 9, wherein the view shows the interface's circumferential wall in more detail;
Figure 11 is a perspective view of an interface of a dental component according to a seventh embodiment;
Figure 12 is a perspective view of a dental component's interface according to an eighth embodiment;
Figure 13(a) is a cross-sectional view along the longitudinal axis of a dental component according to the eighth embodiment with its interface assembled to a corresponding interface of another dental component;
Figure 13(b) is a cross-sectional view along the longitudinal axis of the dental component illustrated in figure 13(a), wherein the view shows the circumferential wall of the dental component's interface of the eighth embodiment in more detail;
Figure 14 is a perspective view of a dental component's interface according to a ninth embodiment;
Figure 15 is a cross-sectional view perpendicular to the longitudinal axis of the dental component illustrated in figure 14, wherein the view shows the interface of the dental component assembled to a corresponding interface of another dental component in more detail;
Figure 16 shows a perspective view of a dental component's interface according to an tenth embodiment;
Figure 17 shows a cross-sectional view along the longitudinal axis of the dental component illustrated in figure 16, wherein the view shows the interface of the dental component assembled to a corresponding interface of another dental component and fastened by a dental screw; and
Figure 18 is a perspective view of an interface of a dental component according to an eleventh embodiment.

### DETAILED DESCRIPTION OF PREFERRED EMBODIMENTS

In the following, exemplary embodiments of a dental component will be described that is configured to retain another dental component after assembly by a friction fit or a positive engagement fit.

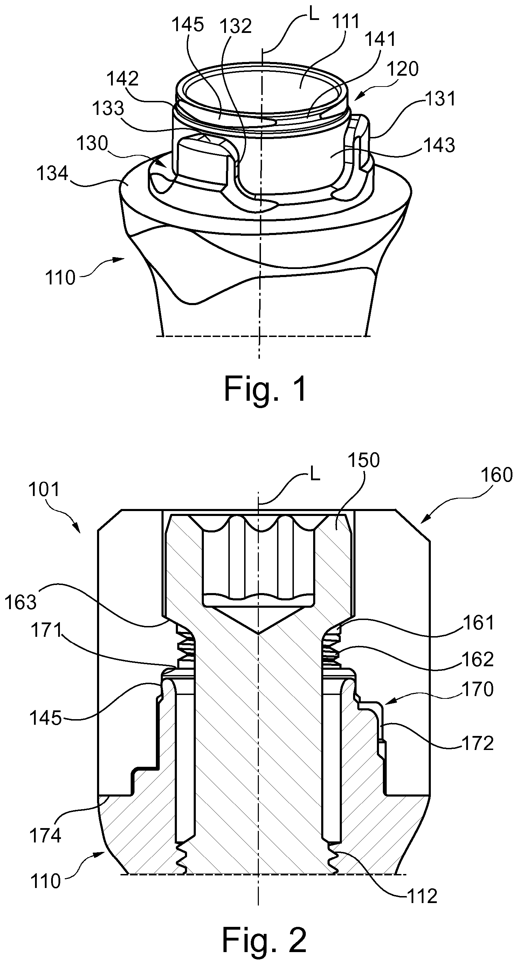

As illustrated in figures 1 and 2, a dental component 110 of a first embodiment comprises an interface 120. The interface 120 can be arranged at an apical or coronal end of the dental component 110. The interface 120 of the first exemplary embodiment of a dental component 110 also includes a continuous circumferential wall 143 about the longitudinal axis L extending between the apical end and the coronal end of the dental component 110. The continuous circumferential wall 143 may surround a through hole 111 for a dental screw 150 (cf. figure 2). The through hole 111 may further include a thread 112 so that the dental screw 150 may be used for securing another dental component 160 to this dental component 110. Alternatively, the dental screw 150 may be employed to fix the dental components 110 and 160 to yet another dental component such as a dental implant. An inner thread 112 may be included in the through hole 112 such as for a preliminary assembly of the dental screw 150, the dental component 110, and the other dental component 160. A dental component may be a dental implant or any part of a superstructure such as an abutment, a spacer, a sleeve or a dental restoration.

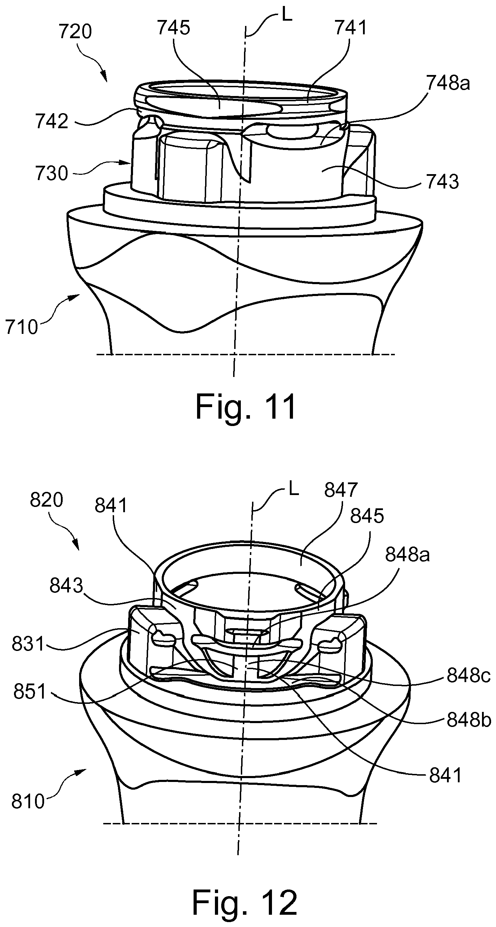

As shown in figure 1, the circumferential wall 143 comprises three retention sections 141 and three weakened sections 145. In this exemplary embodiment, the sections 141 and 145 are arranged at the end of the interface 120. Alternatively, these sections may be arranged at an intermediate portion of the circumferential wall 143 as seen in the longitudinal direction of the dental component 110 (cf. figure 12). The interface 120 further comprises at least one retention section 141 and at least one weakened section 145. The sections 141, 145 alternate along the circumference of the circumferential wall 143. As a result, the interface 120 comprises an equal number of retention and weakened sections. In the exemplary embodiment shown in figures 1 and 2, there are three retention sections 141 and correspondingly three weakened sections 145. This number of retention and weakened sections is not to be construed as limiting and any other number of sections may be used such as 1 to 8, 2 to 6, or 3 to 5 of each section.

Since the circumferential wall 143 is continuous, the same applies to the retention and weakened sections. In other words, the retention and weakened sections 141 and 145 along the circumferential wall 143 do not have any discontinuities, such as a gap, neither between the sections nor within the sections. As described above, this design of the at least one retention section 141 and the at least one weakened section 145 provides the interface 120 with stability and integrity when and after being assembled to the other dental component 160.

The retention section 141 and the weakened section 145 are defined by a difference in wall thickness. More specifically, the retention section 141 is defined by having at least and preferably the general wall thickness, wherein the weakened section 145 is defined by wall thickness that is smaller than the wall thickness of the retention section 141. In other words, the maximum wall thickness of the retention section 141 preferably corresponds to the general wall thickness of the circumferential wall 143.

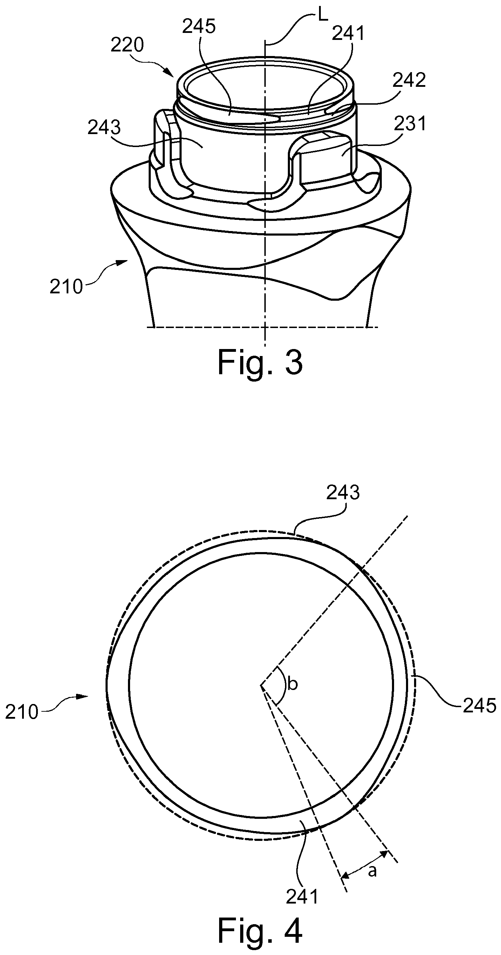

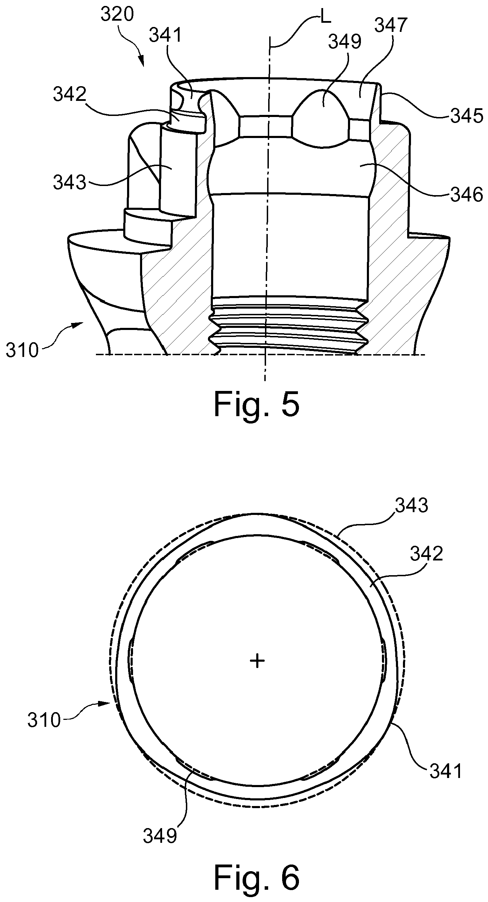

The general wall thickness of the circumferential wall 143 is the wall thickness of the general geometry of the circumferential wall 143. For example, the general geometry of the circumferential wall 143 in figures 1 and 2 may be defined by the profile of the circumferential wall 143 in a cross-section perpendicular to the longitudinal axis L. This profile is a circular annular profile (cf. figures 4 and 6). Instead of the circular annular profile of the embodiments described herein, a different profile may be used for the circumferential wall 143. For example, the annular profile can have any other geometry previously listed such as oval, rectangular, or polygonal. Any of these profiles have the advantage that they further include an indexing function described further below that allows for a predetermined relative orientation between the dental component 110 and the other dental component 160. The annular profile of the general geometry of the circumferential wall is preferably constant as shown for the case of a circular annular profile in figures 4 and 6. Preferably, also the circumferential wall's thickness in the longitudinal direction is constant.

Since the wall thickness of the weakened section 145 is less than the wall thickness of the retention section 141, the weakened section 145 is more flexible than the retention section 141. Thus, the flexibility of the interface 120 is increased at the weakened section 145. This results in the retention section 141 being moved more easily in a radial direction relative to the longitudinal axis L due to an easier deformation of the adjacent weakened section(s) 145. In other words, the force required to deform or move the retention section 141 in a radial direction is reduced in comparison to a case, in which the circumferential wall 143 does not include a weakened section 145.

Based on the increased flexibility of the interface 120 the retention section 141 is able to retain the other dental component 160 when being assembled to the dental component 110 by a friction fit or positive engagement fit. In contrast, the weakened section 145 is preferably substantially not in contact with the other dental component 160. In other words, the weakened section is not able to retain the other dental component so that the dental components 110 and 160 remain assembled against gravitational forces. Thus, the weakened section 145 is preferably at a distance to the body of the other dental component 160 after being mounted.

For the retaining function, the reduction in wall thickness of the weakened section 145 is at least partly present on the side of the circumferential wall 143 where the retention section 141 is located. In other words, the profile's edge of the weakened section 145 in the plane perpendicular to the longitudinal axis L is at a distance of the profile's edge of the circumferential wall 143 in this plane on the side of the circumferential wall 143 where the retention section 141 is located. The profile of the retention section 141 may be defined by coinciding with the profile of the general geometry of the circumferential wall 143 in at least one point.

The retention section 141 can have an extension in the circumferential direction along the circumferential wall 143 that is less than the extension of the weakened section 145 in this direction. In other words, the retention section 141 has an angular extension α and the weakened section 145 has an angular extension β, wherein α is smaller than β (cf. figures 4 and 6). Preferably, the ratio between the extension of the retention section 141 to the extension of the weakened section 145 is 1/2, 1/3, 1/4, or 1/5, wherein a ratio of 0 corresponds to the retention section 141 being a point along the periphery of the circumferential wall. If more than one weakened section 145 is provided, all weakened sections 145 preferably have the same angular extension. The same applies to multiple retention sections 141.

Additionally, the dental component 110 may be provided with a first circumferential recess 142. This circumferential recess 142 preferably extends along the at least one retention section 141 and/or the at least one weakened section 145 in the circumferential direction of the circumferential wall 143. Even more preferably, the first circumferential recess 142 is defined along the entire periphery of the circumferential wall 143. The circumferential recess 142 also serves to increase the flexibility of the interface 120 so that the at least one retention section 141 may be deformed more easily in the radial direction relative to the longitudinal axis L. It should be noted that the deformation of the interface in the area of the retention section 141 and the weakened section 145 is preferably at least mainly an elastic deformation in order to provide the elasticity for a friction fit or positive engagement fit.

As already mentioned above, the dental component 110 is for an assembly to another dental component 160. During assembly, the interface 120 of the dental component 110 engages a corresponding interface 170 of the other dental component 160 (see figure 2). The interface 170 of the other dental component 160 particularly comprises a retention portion 171, which is configured to engage the retention section 141 in a friction fit or a positive engagement fit.

In the embodiment shown in figures 1 and 2, the retention portion 171 is adapted for a friction fit. While the interface 120 of the dental component 110 is inserted into the corresponding interface 170 of the other dental component 160, the retention sections 141 engage the engagement portion 171 and are deformed radially inward. As a result, the retention sections 141 exert a compressive force to the surface of the engagement portion 171 resisting this deformation. This compressive force acts on the retention portion 171, thereby causing a friction force that retains the other dental component 160 to the dental component 110. This friction force is preferably increased by adapting the contact surface of the retention section 141 accordingly, such as by an increased roughness, material and/or coating.

In case of a positive engagement fit, a protrusion of the interface 120 or the interface 170 at the level of the retention section engages a recess in the other one of the interface 120 and the interface 170. In the embodiment of figures 1 and 2, the retention portion 171 may be formed as a recess to be engaged by the retention section 141. As described above, the positive engagement fit can result in a higher retaining force that resists a disassembly of the two dental components.

The interface 120 of the dental component 110 may further comprise a sealing surface 134 that faces a corresponding sealing surface 174 of the other dental component's interface 170 in an assembled state in order to prevent the ingress of substances that may otherwise endanger the functionality of the dental assembly 101.

The other dental component 160 may comprise a through hole 161 for inserting a dental screw 150. The through hole 161 may comprise an internal thread 162 for engaging the dental screw 150, for example for a preliminary assembly of the dental screw 150 to the other dental component 160. As shown in figure 2, the through hole 161 may also comprise a screw seat 163 to secure the other dental component 160 to the dental component 110.

As illustrated in figures 1 and 2, the dental component 110 may further comprise an indexing means 130 that preferably comprises at least one indexing finger 131. The at least one indexing finger 131 pre-defines at least one relative rotational position between the first dental component 110 and the other dental component 160 when being mounted to each other. Such a configuration has the advantage to guide the at least one retention section 141 to a predetermined location at the interface 170 of the other dental component 160. This way the retention section 141 is not able to move towards a path of least resistance while being assembled to the other dental component 160.

The at least one indexing finger 131 may be located on the same side of the circumferential wall 143 as the retention section 141. In another embodiment, the at least one indexing finger may also be arranged on the opposite side of the circumferential wall 143. In both cases, the indexing fingers 131 of the indexing means 130 are preferably integral with and act as a reinforcement of the circumferential wall 143. As will be described further below, the placement of the indexing fingers 131 affects the deformation behavior around the retention section 141.

Preferably, the at least one indexing finger 131 comprises an indexing surface 132 that includes a guiding portion 133 that faces in the direction of the longitudinal axis L. The guiding portion 133 may assist a dental professional during assembly of the dental component 110 by providing guidance in a rotational direction about the longitudinal axis L towards the next predetermined relative rotational position (indexing position). This predetermined relative rotational position is then engaged during assembly by the at least one indexing finger 131 entering an indexing portion 172 of the interface 170 that corresponds to the at least one indexing finger 131 (see figure 2).

Figures 3 and 4 are illustrations of a second exemplary embodiment. This embodiment differs in relation to the first embodiment of figures 1 and 2 in that the indexing fingers 231 of the dental component 210 are arranged at a different rotational position about the longitudinal axis L in respect to the retention section 241 than in the first embodiment.

More specifically, in the embodiment of figures 1 and 2, each retention section 141 is located in between two indexing fingers 131 (may also be the two sides of one indexing finger). As illustrated, each retention section is preferably arranged in the middle of two adjacent indexing fingers.

In contrast, the indexing fingers 231 of the second embodiment are located at the same rotational position as the retention sections 241. As a result, the retention sections 241 have a higher stiffness in the radial direction relative to the longitudinal axis L than the retention sections 141 of the first embodiment. The influence of the rotational position is higher for an embodiment of an interface that does not comprise a first circumferential recess. This is caused by a change in the deformation pattern that originates from the presence or absence of a circumferential recess.

More specifically, the deformation for a radial movement of the retention section generally follows a U-shape. If a first circumferential recess is provided, the base of the U-shape is basically at the weakening introduced by this circumferential recess. The deformation at the legs of the U-shape is present on either side at the adjacent weakened section(s). In an embodiment without a first circumferential recess, the bending region at the base of the U-shape is less defined and shifts further away from the retention section along the circumferential wall 143, 243 in the direction of the longitudinal axis L. However, it can shift less if the circumferential wall 243 is provided with additional support by an indexing finger 231 (see figure 3), which results in a higher stiffness of the retention section in the radial direction.

Figure 4 shows a cross-sectional view in a plane perpendicular to the longitudinal axis L at the level of the weakened and retention sections 245, 241. As already described above in relation to the first embodiment, the general geometric shape of the profile of the circumferential wall 243 is preferably a circular annular ring as shown by the discontinuous white line in figure 4. In other words, this discontinuous white line is an envelope of the general geometry of the circumferential wall. The decrease in thickness of the weakened section 245 in comparison to the retention section 241 is defined by a difference of the outer shape of the weakened section 245 in relation to the outer circular shape of the circumferential wall 243, i. e. the general geometry of the circumferential wall. In this embodiment, the reduced thickness is exclusively achieved by this difference in shapes. However, the reduced thickness can also result from a difference in shapes on both sides of the circumferential wall (see figure 6). Further, figure 3 shows like figure 1 that the weakened section also has a reduced thickness compared to the general thickness of the circumferential wall in a longitudinal direction.

Preferably, the difference in thickness of the weakened section 245 originates from a gradual change of the profile of the circumferential wall 245. Even more preferably, this gradual change of the profile is following a curve, such as the one shown in figure 4. The change in profile can also be gradually achieved by following a straight line. This gradual change of the profile reduces stress concentrations. Nonetheless, in other embodiments, the change in thickness can be discontinuous, i.e. in form of a radial step in the profile.

Turning to the third embodiment illustrated in figures 5 and 6, this embodiment differs from the previous embodiments by comprising additional weakenings in form of a second circumferential recess 346, an elongated notch 349 and a chamfer 347. Although shown in combination, these features can be partly omitted or be appropriately combined according to the desired deformation characteristics in view of the retaining functionality. All these features are recesses in relation to the general wall thickness, i. e. they are created by taking material away from the general geometry of the circumferential wall

As figure 5 shows, the second circumferential recess 346 is located on the opposite side of the circumferential wall 343 in relation to the side, where the retention section 341 is located. Further, the second circumferential recess 346 is preferably arranged further away from the retention section 341 in the direction of the longitudinal axis than the first circumferential recess 342. With increasing distance of the second circumferential recess 346 in relation to the retention section 341, the influence of the second circumferential recess 346 on the elastic behavior of the retention section 341 decreases. The same applies to the first circumferential recess 342 that is located adjacent to the retention section 341. Similar to the first circumferential recess 342, the second circumferential recess 346 facilitates the deformation of the retention section 341 at the basis of the U-shape.

Further, the second circumferential recess may also be configured to act as a snap-fit feature, i. e. a snap-fit recess for receiving a snap-fit protrusion of the other dental part.

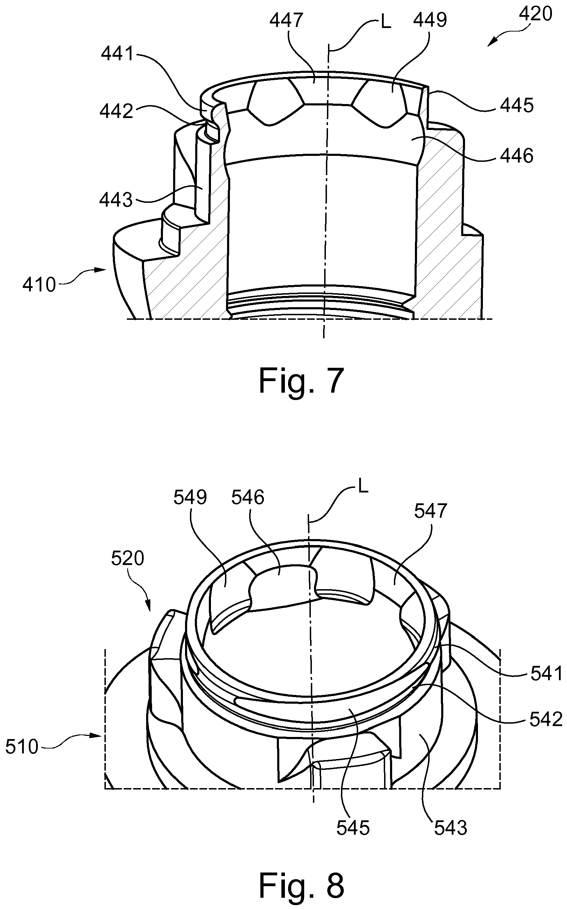

Like the first circumferential recess 342, the second circumferential recess 346 may extend circumferentially within a plane perpendicular to the longitudinal axis L and be defined more specifically along the line of intersection of this plane with the circumferential wall 343 (see figure 6). Further, the second circumferential recess 346 may be defined along the entire circumference of the circumferential wall 343 forming a ring-shaped recess (see figures 5 and 7).

As particularly shown in figure 6, the elasticity resulting from the U-shaped deformation of the retention section 341 can additionally (or alternatively) be increased by elongated notches 349 that are defined in the direction of the longitudinal axis L. The elongated notches 349 are preferably arranged in pairs on either side of a retention section 341. As illustrated in figures 5 and 6, they are preferably arranged on the side of the circumferential wall 343 opposite to the site where the retention section 341 is located. In another embodiment these elongated notches 349 may also be placed on the same side as the retention section 341. Further, they may also be placed on both sides. The elongated notches 349 increase the elasticity of the interface 120 at the legs of the U-shaped deformation originating from a radial movement of the retention section 341 (in this embodiment radially inward).

As illustrated in figure 5, the side of the circumferential wall 343 opposite to the location of the retention sections 341 may further be provided with a chamfer 347 that preferably extends from the end of the interface 320 in the longitudinal direction of the dental component 310 to the level of at least part of the first circumferential recess 342. The chamfer may extend along the entire circumference of the circumferential wall 343, i.e. in the embodiment of figure 5 along the inner side of the circumferential wall 343. This results in a uniform weakening of the circumferential wall 343 at the end of the interface 320.

As shown in figure 5, the chamfer 347 and the second circumferential recess 346 may be arranged at a distance to each other. However, as shown in the embodiment of figure 7, it is also possible to place the chamfer 447 and the circumferential recess 446 directly adjacent to each other.

Another difference of the fourth embodiment shown in figure 7 in comparison to the embodiment of figures 5 and 6 is that the elongated notches 449 extend from the end (coronal end) of the interface 422 into the second circumferential recess 446. In the embodiment shown in figure 5, the elongated notches 349 also extend into the second circumferential recess 346 but start at a distance from the end (coronal end) of the interface 320. This is due to a reduced depth of the elongated notches 349 resulting in more weakening and flexibility of the interface 320.

Further, a part of the second circumferential recess 446 is located on the same level along the longitudinal axis L as the first circumferential recess 442 (cf. figure 7). This overlap along the longitudinal direction of the dental component 410 results in the thickness of the circumferential wall 443 being reduced on both sides of this wall in relation to its general geometric shape and a corresponding increase in flexibility at the basis of the U-shaped deformation.

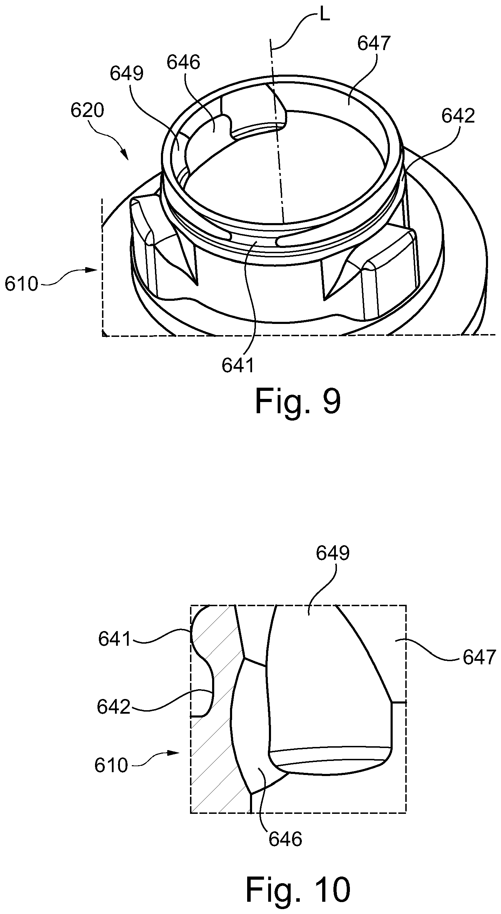

The fifth embodiment illustrated in figure 8 primarily differs from the fourth embodiment shown in figure 7 by the second circumferential recess 546 primarily being defined only along the circumferential extension of the retention sections 541 (cf. figure 10). In other words, on the side of the circumferential wall 543 opposite to the side where the retention section 541 is provided, there is substantially no second circumferential recess 546 extending along the circumferential extension of the weakened section 545.

As the sixth embodiment illustrated in figure 9 shows, the elongated notches 649 and the second circumferential recess 646 may also be provided only to one (or some) of the retention sections 641. Figure 10 illustrates a cross-section of an additional weakening due to the second circumferential recess 646 along a retention section 641 as previously described in more detail. This weakening basically corresponds to the weakenings described in relation to the embodiments shown in figures 7 and 8.

Figure 11 shows yet another technique to increase the flexibility of the interface 720 at a retention section 741 so that it is easier to move the retention section 741 in a radial direction. This technique provides a first elongated cutout 748a that is located at a distance to the retention section 741. Preferably, the first elongated cutout 748a partially extends into a first circumferential recess 742.

The first elongated cutout 748a results in an elongated through hole in the circumferential wall 743. It is preferably defined along a secant to the circumferential wall 743. Further, the first elongated cutout 748a is preferably located at the circumferential position of (each of) the retention sections 741. As a result of this first elongated cutout 748a, the corresponding retention section 741 is configured as a bending section or beam section. Such a bending section has an increased torsional flexibility so that the retention section 741 may more easily rotate elastically about an axis substantially parallel to a tangential direction to the circumferential wall 743. This is particularly advantageous if the retention section 741 is intended for a positive engagement fit to another dental component since it allows the protrusion to be bent more easily before snapping into a corresponding recess. In this embodiment, the indexing means 730 are preferably placed in the circumferential direction in relation to the retention section 741 as described in relation to the first embodiment illustrated in figures 1 and 2.

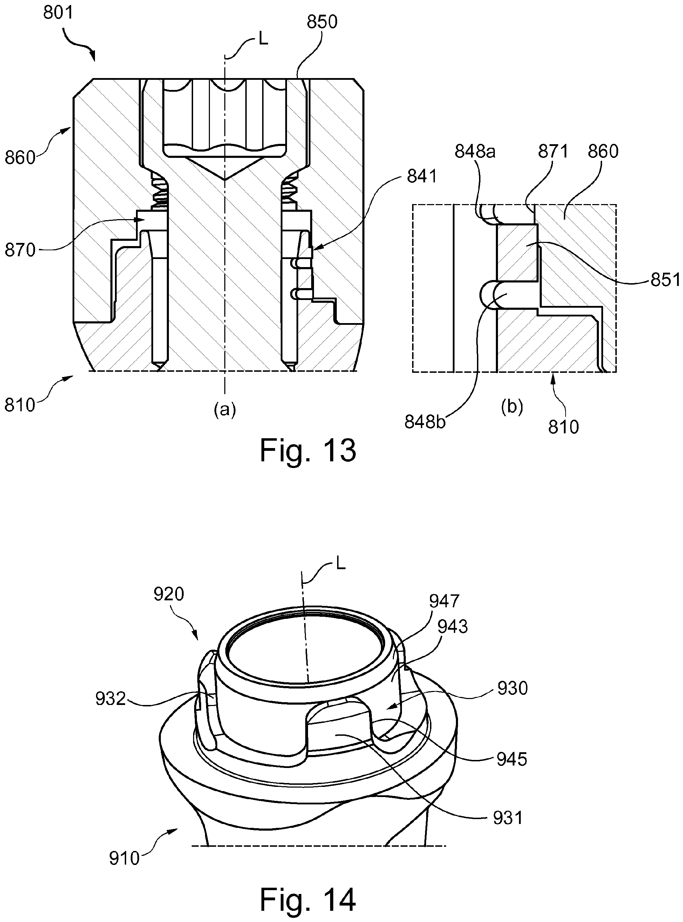

Another technique for facilitating the radial movement of a retention section 841 is illustrated in the eighth embodiment of figures 12 and 13. In this embodiment, a part of the retention section(s) 841 is located at an intermediate portion of the circumferential wall 843 as seen in the longitudinal direction of the dental component 810. The retention section 841 is particularly defined in the longitudinal direction of the dental component 810 by a first elongated cutout 848a and a second elongated cutout 848b. These two elongated cutouts 848a and 848b are preferably parallel to each other and in a plane parallel to the longitudinal axis L and are defined along a secant of the circumferential wall 843.

Similar to the previous embodiment, the retention section 841 is configured to act as a bending section 848c beam that is fixedly supported at both ends. As shown in figure 12, the retention section 841 may extend along at least a part of another bending section 848c defined between the end of the interface 820 and the first elongated cutout 848a. Further, there may be retention sections provided without any elongated cutouts (cf. retention section 841 at the indexing fingers 831).

As shown in more detail in the cross-sections of figures 13a and 13b, the retention section 841 is configured to interact with the interface 870 of another dental component 860 by means of a friction fit in order to retain these dental components to each other (right side of figure 13a and shown in more detail in figure 13b). More specifically, the retention section 841 interacts with a retention portion 871 of the other dental component 860 so that the retention section 841 experiences an elastic deformation in a radial direction relative to the longitudinal axis L. As described above, this elastic deformation is converted into a friction force acting between the retention section 841 and the retention portion 871 in order to retain the dental components 810 and 860 to each other. The dental components may further be secured to each other or to yet another dental component by a dental screw 850.

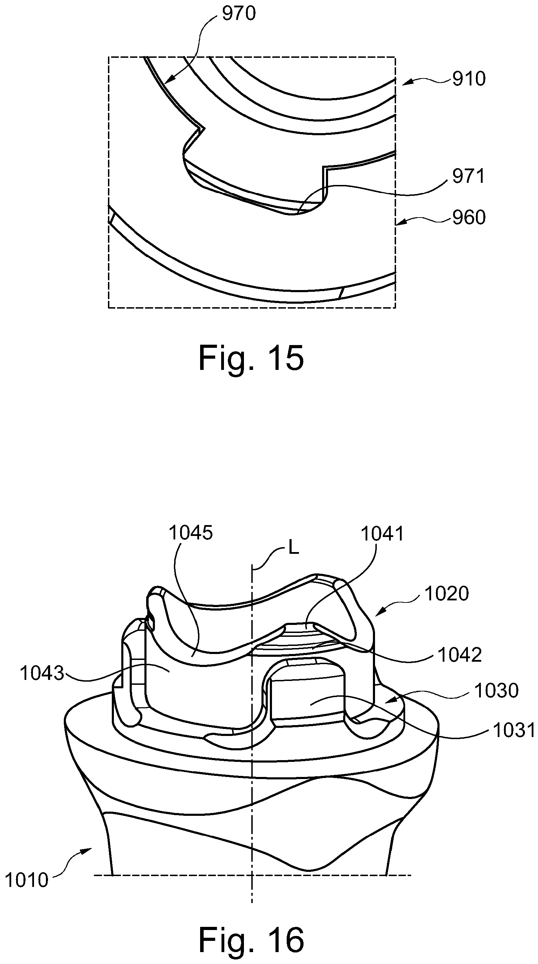

Another embodiment for assembling and retaining another dental component to a dental component 910 is illustrated in figures 14 and 15. In this embodiment, the retaining section 945 is not part of the circumferential wall 943 but is instead located at the edge of the indexing surface 932 of an indexing finger 931. Upon assembly with another dental component 960, this retention section 945 interferes with a retention portion 971 of the interface 970 (see figure 15). As a result, the dental component 910 and the other dental component 960 are retained to each other by a friction fit.

The tenth and eleventh embodiment illustrated in figures 16 to 18 differ from the first and second embodiment in that the weakened section is defined by a concave recess at the end of the dental component's interface.

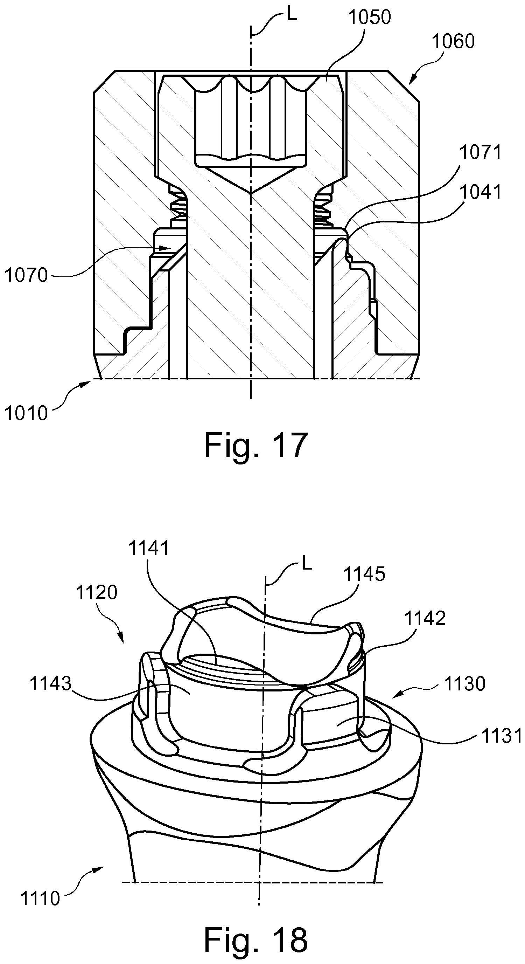

More specifically, in the tenth embodiment shown in figures 16 and 17, at the end of the interface 1020 or circumferential wall 1043, retention sections 1041 are defined or limited by concave recesses on either side in the circumferential direction of the circumferential wall 1043 that in turn define weakened sections 1045. This weakened sections 1045 increase the flexibility of the retention sections 1041 used to engage another dental component 1060 in a friction fit or positive engagement fit. As illustrated in figure 17, here the retention sections 1041 are configured for a friction fit with a retention portion 1071 of the interface 1070 of the other dental component 1060. As previously described, the flexibility of the interface 1070 at the retention sections 1041 may be increased by any of the means discussed in relation to the other embodiment. In the exemplary embodiment of figures 16 and 17, flexibility is increased by means of a first circumferential recess 1042.

The eleventh embodiment shown in figure 18 differs from the previous embodiment illustrated in figures 16 and 17 in that the retention sections 1141 are at a circumferential position about the longitudinal axis L that is located between, preferably in the middle of, two indexing fingers 1131 of the indexing means 1130. This results in an increase of flexibility at the basis of the U-shaped deformation. In the tenth embodiment, the retention section 1041 are located at the same position along the circumference of the circumferential wall 1043 as the indexing fingers 1031. Similar to the previous embodiments, the indexing means 1030, 1130 of the tenth and eleventh embodiment are preferably integral to the circumferential walls 1043, 1143.

It should be noted that any means and any combination of the embodiments described above that allow for adapting the flexibility of the interface are generally selected and configured to provide the desired flexibility for assembling the dental component to another dental component and for providing a retaining force that is sufficiently high to keep the dental components in an assembled state. This is particularly advantageous in case of a connection between two dental components that is based on a friction fit. The flexibility can further be adapted by manufacturing any of the dental components described above from materials commonly used in the dental field such as metal, in particular titanium and its alloys, and/or polymers.

### REFERENCE SIGNS

The following lists the last two digits of the reference signs used in the description and the drawings. Throughout the drawings these digits refer to features that have the same or an equivalent function and/or structure. The remaining at least one preceding digit represents the embodiment.
- 01: dental assembly
- 10: dental component
- 11: through hole
- 12: thread
- 20: interface
- 30: indexing means
- 31: indexing finger
- 32: indexing surface
- 33: guiding portion of the indexing surface
- 34: circumferential sealing surface
- 41: retention section
- 42: first circumferential recess
- 43: circumferential wall
- 45: weakened section
- 46: second circumferential recess
- 47: chamfer
- 48a: first elongated cutout
- 48b: second elongated cutout
- 48c: bending section
- 49: elongated notch
- 50: dental screw
- 51: bending section
- 60: other dental component
- 61: through hole
- 62: thread
- 63: screw seat
- 70: interface of the other dental component
- 71: retention portion
- 72: indexing portion
- 74: circumferential sealing surface
- 70: dental screw
- L: longitudinal axis
- α: angular range of the retention section
- β: angular range of the weakened section

## Claims

1. A dental component (110; 210; 310; 410; 510; 610; 710; 810) comprising:
a body with an apical end, a coronal end, and a longitudinal axis (L) extending between the apical end and the coronal end;
an interface (120; 220; 320; 420; 520; 620; 720; 820) for retaining another dental component (160; 860) in the direction of the longitudinal axis, wherein at least a portion of the interface is formed as a continuous circumferential wall (143; 243; 343; 443; 543; 643; 743; 843) about the longitudinal axis, the circumferential wall including at least one retention section (141; 241; 341; 441; 541; 641; 741; 841) and at least one weakened section (145; 245; 345; 445; 545; 645; 745; 845), wherein:
the weakened section is configured to increase the flexibility of the interface in a radial direction;
the at least one retention section alternates with the at least one weakened section along the circumference of the circumferential wall,
in a radial cross section containing the retention section and the weakened section, the thickness of the circumferential wall increases from the weakened section to the retention section, and
in a longitudinal cross section containing the weakened section, the thickness of the circumferential wall increases.

2. The dental component (110; 210; 310; 410; 510; 610; 710; 810) according to claim 1, wherein the at least one retention section (141; 241; 341; 441; 541; 641; 741; 841) has an angular extension along the circumference of the circumferential wall (143; 243; 343; 443; 543; 643; 743; 843) that is smaller than the angular extension of the at least one weakened section (145; 245; 345; 445; 545; 645; 745; 845)along the circumferential wall.

3. The dental component (110; 210; 310; 410; 510; 610; 710) according to claim 1 or 2, wherein a first circumferential recess (142, 242; 342; 442; 542; 642; 742) is defined in the circumferential wall (143; 243; 343; 443; 543; 643; 743) on the side of the retention section (141; 241; 341; 441; 541; 641; 741), preferably along the circumferential extension of the weakened section (145; 245; 345; 445; 545; 645; 745) and/or retention section, the circumferential recess being located apically or coronally of the weakened and retention sections.

4. The dental component (110; 210; 310; 410; 510; 610; 710; 810) according to any one of the preceding claims, wherein the thickness of the circumferential wall (143; 243; 343; 443; 543; 643; 743; 843) of the weakened section (145; 245; 345; 445; 545; 645; 745; 845) is reduced on the outer surface and/or inner surface of the circumferential wall.

5. The dental component (110; 210; 310; 410; 510; 610; 710) according to any one of the preceding claims, wherein the reduction of the wall thickness at the at least one weakened section (145; 245; 345; 445; 545; 645; 745)is a continuous reduction from both sides of the at least one weakened section in the circumferential direction, the reduction of the wall thickness preferably being provided along the entire circumferential length of the at least one weakened section.

6. The dental component (110; 210; 310; 410; 510; 610; 710) according to claim 5, wherein the reduction in wall thickness of the at least one weakened section (145; 245; 345; 445; 545; 645; 745) is formed as a curve in a cross-section perpendicular to the longitudinal axis.

7. The dental component (310; 410; 510; 610) according to any one of the preceding claims, wherein the interface (320; 420; 520; 620) further comprises a second circumferential recess (346; 446; 546; 646) in the circumferential direction on the opposite side of the circumferential wall in relation to the retention section (341; 441; 541; 641), in particular a continuous second circumferential recess, the second circumferential recess preferably being located partly on the level of the first circumferential recess.

8. The dental component (310; 410; 510; 610; 810) according to any one of the preceding claims, the interface being provided at an end of the dental component, wherein at the end of the interface (320; 420; 520; 620; 820) preferably a chamfer (347; 447; 547; 647; 847) is defined on the side of the circumferential wall (343; 443; 543; 643; 843) opposite to the retention section, wherein the chamfer even more preferably extends beyond the retention (341; 441; 541; 641; 841) and weakened (345; 445; 545; 645; 845) sections in the longitudinal direction of the dental component.

9. The dental component (310) according to claim 8 as dependent on claim 6, wherein the chamfer (347) and the second circumferential recess (346) are spaced apart from each other in the longitudinal direction (L) of the dental component.

10. The dental component (310; 410; 510; 610) according to any one of the preceding claims, wherein the interface (320; 420; 520; 620) further comprises on the side of the circumferential wall (343; 443; 543; 643) opposite to the retention section (341; 441; 541; 641) at least two elongated notches (349; 449; 549; 649) defined in the longitudinal direction of the dental component, the notches preferably being formed adjacent to either side of the at least one retention section.

11. The dental component (310; 410; 510; 610) according to claim 10 as dependent on claim 7, wherein each of the notches (349; 449; 549; 649) intersects the second circumferential recess (346; 446; 546; 646) on the inner surface of the circumferential wall (343; 443; 543; 643) and preferably extends at least along the entire width of the second circumferential recess.

12. The dental component (710; 810) according to any one of the preceding claims, wherein the interface (720; 820) further comprises a first elongated cutout (748a; 848a) extending throughout the circumferential wall (743; 843) in a direction substantially perpendicular to the longitudinal axis (L), the first elongated cutout being located adjacent to the retention section (741; 841) in the longitudinal direction and preferably in an overlapping relationship with the first circumferential recess (742; 842) on the side of the circumferential wall (743; 843), where the retention section is located.

13. The dental component (810) according to claim 12, wherein the interface further comprises a second elongated cutout (848b) extending throughout the circumferential wall (843), the second elongated cutout being arranged parallel to and spaced apart from the first elongated cutout (848a) forming a bending section (851) between the first elongated cutout and the second elongated cutout, the bending section comprising at least a portion of the retention section (841).

14. The dental component (110; 210; 310; 410; 510; 610; 710; 810) according to any one of the preceding claims, wherein the interface (120; 220; 320; 420; 520; 620; 720; 820) further comprises an indexing means (130; 230; 330; 430; 530; 630; 730; 830) for locking the dental component to the other dental component in a rotational direction about the longitudinal axis (L), wherein the indexing means comprises at least one indexing finger (131; 231; 331; 431; 531; 631; 731; 831), the indexing finger preferably defining an indexing surface (132; 232; 332; 432; 532; 632; 732; 832) that at least partly faces in the direction of the longitudinal axis (L).

15. The dental component (110; 210; 310; 410; 510; 610; 710; 810) according to claim 14, wherein the retention section (141; 241; 341; 441; 541; 641; 741; 841) is located adjacent to a circumferential position of an indexing finger (131; 231; 331; 431; 531; 631; 731; 831) in the longitudinal direction or is located equidistantly to both sides in the circumferential direction from the next indexing finger or indexing fingers.

16. A dental assembly (101; 801) comprising a dental component (110; 210; 310; 410; 510; 610; 710; 810) with an interface (120; 220; 320; 420; 520; 620; 720; 820) according to any one of the preceding claims and another dental component (160; 860) with a corresponding interface for assembly to the interface of the dental component.
